# EUROPEAN PATENT SPECIFICATION

(11) **EP 4 271 098 B1**
(45) Date of publication and mention of the grant of the patent: **25.03.2026**
(21) Application number: 20966960.5
(22) Date of filing: 24.12.2020
(51) Int. Cl.: H04W 28/04, H04L 1/1867

(54) **TERMINAL AND COMMUNICATION METHOD**
ENDGERÄT UND KOMMUNIKATIONSVERFAHREN
TERMINAL ET PROCÉDÉ DE COMMUNICATION

(43) Date of publication of application: 01.11.2023
(73) Proprietor: NTT DOCOMO, INC., Tokyo 100-6150 (JP)
(72) Inventor: KUMAGAI, Shinya, Tokyo 100-6150 (JP); NAGATA, Satoshi, Tokyo 100-6150 (JP); PI, Qiping, Beijing, 100190 (CN); WANG, Jing, Beijing, 100190 (CN); CHEN, Lan, Beijing, 100190 (CN)
(74) Representative: Hoffmann Eitle
(86) International application number: PCT/JP2020/048596
(87) International publication number: WO 2022/137472

(56) References cited:
- PANASONIC: "Discussion on UE feedback enhancements for HARQ-ACK", vol. RAN WG1, no. e-Meeting; 20201026 - 20201113, 23 October 2020 (2020-10-23), XP051945442, Retrieved from the Internet <URL:https://ftp.3gpp.org/tsg_ran/WG1_RL1/TSGR1_103-e/Docs/R1-2008952.zip R1-2008952.docx> [retrieved on 20201023]
- ASIA PACIFIC TELECOM: "Discussion on UE feedback enhancements for HARQ-ACK", vol. RAN WG1, no. e-Meeting; 20201026 - 20201113, 1 November 2020 (2020-11-01), XP052350981, Retrieved from the Internet <URL:https://ftp.3gpp.org/tsg_ran/WG1_RL1/TSGR1_103-e/Docs/R1-2009053.zip R1-2009053 Discussion on UE feedback enhancements for HARQ-ACK.docx> [retrieved on 20201101]
- QUALCOMM INCORPORATED: "HARQ-ACK enhancement for IOT and URLLC", vol. RAN WG1, no. e-Meeting; 20201026 - 20201113, 1 November 2020 (2020-11-01), XP052351177, Retrieved from the Internet <URL:https://ftp.3gpp.org/tsg_ran/WG1_RL1/TSGR1_103-e/Docs/R1-2009257.zip R1-2009257 HARQ-ACK enhancement for IOT and URLLC.docx> [retrieved on 20201101]
- MODERATOR (NOKIA): "Moderator summary #1 on HARQ-ACK feedback enhancements for NR Rel-17 URLLC/IIoT (AI 8.3.1.1)", vol. RAN WG1, no. e-Meeting; 20201026 - 20201113, 5 November 2020 (2020-11-05), XP052351477, Retrieved from the Internet <URL:https://ftp.3gpp.org/tsg_ran/WG1_RL1/TSGR1_103-e/Docs/R1-2009566.zip R1-2009566_Summary #1 of [103-e-NR-IIOT_URLLC_enh-01]_HARQ _enh_v1.docx> [retrieved on 20201105]
- INTEL CORPORATION: "On Intra-UE Multiplexing and Prioritization for Release 17 URLLC/IIoT", vol. RAN WG1, no. e-Meeting; 20201026 - 20201113, 1 November 2020 (2020-11-01), XP052350916, Retrieved from the Internet <URL:https://ftp.3gpp.org/tsg_ran/WG1_RL1/TSGR1_103-e/Docs/R1-2008987.zip R1-2008987 Intel - Intra-UE prioritization.docx> [retrieved on 20201101]
- NOKIA, NOKIA SHANGHAI BELL: "HARQ-ACK Feedback Enhancements for URLLC/IIoT", 3GPP DRAFT; R1-2008842, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945381
- PANASONIC: "Discussion on UE feedback enhancements for HARQ-ACK", 3GPP DRAFT; R1-2008952, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945442
- NTT DOCOMO, INC.: "Discussion on HARQ-ACK feedback enhancements for Rel.17 URLLC", 3GPP DRAFT; R1-2009182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20201026 - 20201113, 23 October 2020 (2020-10-23), Mobile Competence Centre ; 650, route des Lucioles ; F-06921 Sophia-Antipolis Cedex ; France , XP051945513

## Description

### [FIELD OF THE INVENTION]

The present invention relates to a terminal and a communication method in a wireless communication system.

### [BACKGROUND OF THE INVENTIONI

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). In 5G, various wireless technologies and network architectures are being discussed to satisfy the requirements of a radio link delay of 1 ms or less while achieving throughput of 10 Gbps or more.

In addition, in NR, a downlink SPS (Semi-Persistent Scheduling) is specified in which PDSCH (Physical Downlink Shared Channel) resources are configured in advance for a terminal and activation/release is performed by DCI (Downlink Control Information), which enables low-latency data reception (For example, non-patent references 1 and 2).

Other known methods are disclosed in PANASONIC: "Discussion on UE feedback enhancements for HARQ-ACK", 3GPP DRAFT; R1-2008952, 23 October 2020, ASIA PACIFIC TELECOM: "Discussion on UE feedback enhancements for HARQ-ACK", 3GPP DRAFT; R1-2009053, 1 November 2020, QUALCOMM INCORPORATED: "HARQ-ACK enhancement for IOT and URLLC", 3GPP DRAFT; R1-2009257, 1 November 2020, MODERATOR (NOKIA): "Moderator summary #1 on HARQ-ACK feedback enhancements for NR Rel-17 URLLC/IIoT (AI 8.3.1.1)", 3GPP DRAFT; R1-2009566, 5 November 2020, and INTEL CORPORATION: "On Intra-UE Multiplexing and Prioritization for Release 17 URLLC/IIoT", 3GPP DRAFT; R1-2008987, 1 November 2020.

### [Citation List]

### [Non-Patent Document]

[Non-Patent Document 1] 3GPP TS 38.213 V16.3.0 (2020-09)
[Non-Patent Document 2] 3GPP TS 38.331 V16.2.0 (2020-09)

### SUMMARY OF THE INVENTION

### [TECHNICAL PROBLEM]

In NR, an operation of configuring priorities to signals or channels and controlling communication based on the configured priorities, is being discussed. For example, there is a case in which PUCCH (Physical Uplink Control Channel) for transmitting HARQ-ACK (Hybrid automatic repeat request Acknowledgement) corresponding to the PDSCH reception is dropped because of control according to priorities. In addition, there is a case in which HARQ-ACK corresponding to PDSCH according to SPS collides with a DL (Downlink) symbol or a flexible symbol, and thus, the HARQ-ACK is dropped.

Therefore, a trigger for retransmitting the HARQ-ACK feedback has been proposed. However, it is unclear how to perform processing in a case where HARQ-ACK is retransmitted.

The present invention has been made in view of the above points, and an object of the present invention is to enable a terminal to retransmit, to a base station, the dropped feedback information corresponding to reception of data.

### [SOLUTION TO PROBLEMI

The present invention is defined by the independent claims. Preferred embodiments are defined by the dependent claims. Further aspects and examples are provided for facilitating the understanding of the invention.

### [ADVANTAGEOUS EFFECTS OF INVENTIONI

According to the disclosed technology, a terminal is enabled to retransmit, to a base station, the dropped feedback information corresponding to reception of data.

### BRIEF DESCRIPTION OF THE DRAWINGS

[Fig. 1] Fig. 1 is a drawing illustrating a wireless communication system according to an embodiment of the present invention.
[Fig. 2] Fig. 2 is a drawing illustrating a wireless communication system according to an embodiment of the present invention.
[Fig. 3] Fig. 3 is a sequence diagram illustrating a basic operation of a wireless communication system according to an embodiment of the present invention.
[Fig. 4] Fig. 4 is a drawing illustrating an example of HARQ-ACK transmission in an embodiment of the present invention.
[Fig. 5] Fig. 5 is a drawing illustrating an example (1) of a HARQ-ACK codebook in an embodiment of the present invention.
[Fig. 6] Fig. 6 is a drawing illustrating an example (2) of a HARQ-ACK codebook in an embodiment of the present invention.
[Fig. 7] Fig. 7 is a drawing illustrating an example (3) of a HARQ-ACK codebook in an embodiment of the present invention.
[Fig. 8] Fig. 8 is a drawing illustrating an example (4) of a HARQ-ACK codebook in an embodiment of the present invention.
[Fig. 9] Fig. 9 is a drawing illustrating an example (5) of a HARQ-ACK codebook in an embodiment of the present invention.
[Fig. 10] Fig. 10 is a drawing illustrating an example (6) of a HARQ-ACK codebook in an embodiment of the present invention.
[Fig. 11] Fig. 11 is a drawing illustrating an example (7) of a HARQ-ACK codebook in an embodiment of the present invention.
[Fig. 12] Fig. 12 is a drawing illustrating an example (8) of a HARQ-ACK codebook in an embodiment of the present invention.
[Fig. 13] Fig. 13 is a drawing illustrating an example of a functional structure of a base station 10 in an embodiment of the present invention.
[Fig. 14] Fig. 14 is a drawing illustrating an example of a functional structure of a terminal 20 in an embodiment of the present invention.
[Fig. 15] Fig. 15 is a drawing illustrating an example of a hardware structure of the base station 10 or the terminal 20 in an embodiment of the present invention.

### DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has. unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

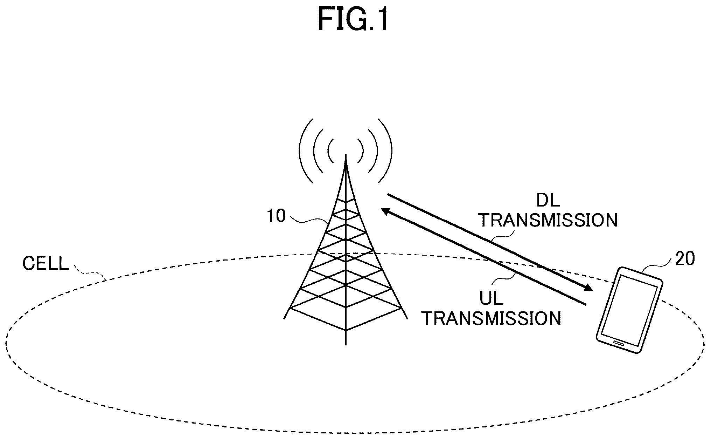

Fig. 1 is a drawing illustrating a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

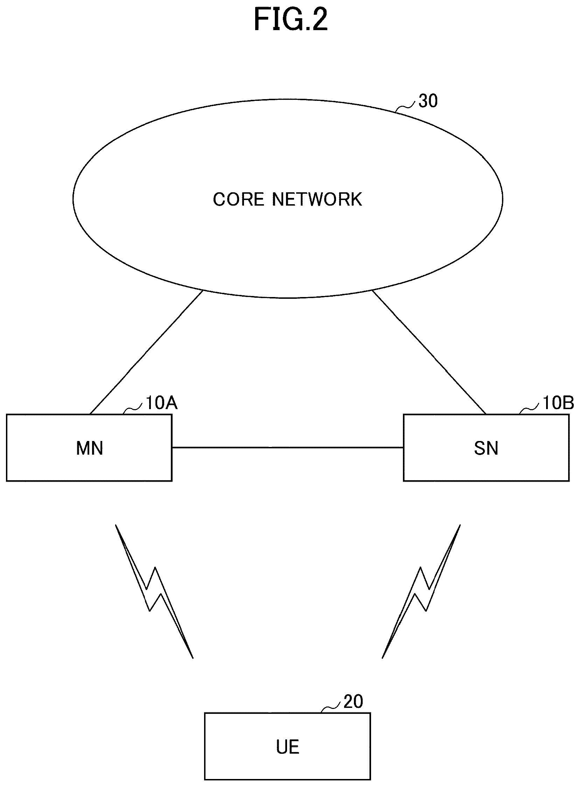

Fig. 2 shows an example of a configuration of a wireless communication system in a case where DC (Dual connectivity) is performed. As shown in Fig. 2, a base station 10A serving as an MN (Master Node) and a base station 10B serving as an SN (Secondary Node) are provided. The base station 10A and the base station 10B are each connected to a core network. The terminal 20 is enabled to communicate with both the base station 10A and the base station 10B.

A cell group provided by the base station 10A that is an MN is called an MCG (Master Cell Group), and a cell group provided by the base station 10B that is an SN is called an SCG (Secondary Cell Group). In addition, in DC, the MCG includes one PCell and one or more SCells, and the SCG includes one PSCell (Primary SCG Cell) and one or more SCells.

Processing operations in an embodiment of the present invention may be performed in a system configuration shown in Fig. 1, in a system configuration shown in Fig. 2, or in other system configurations.

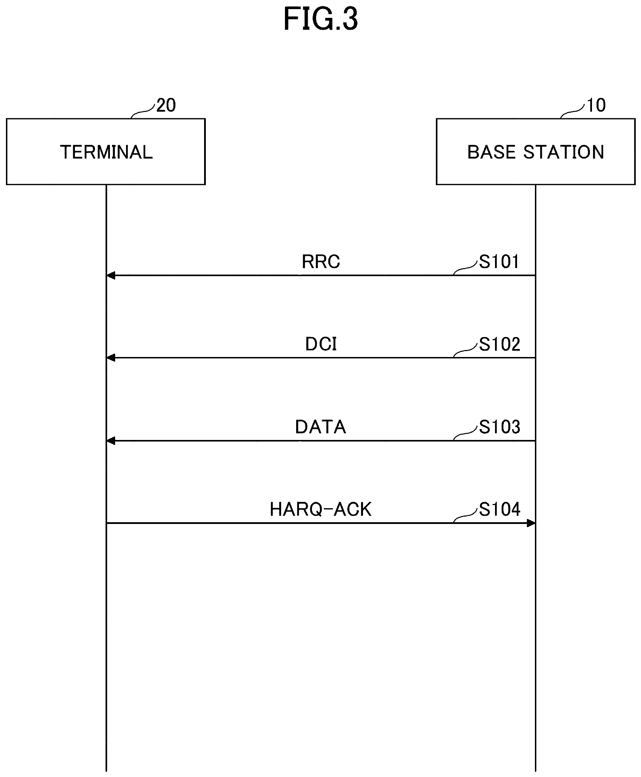

A basic operation example of a communication system in an embodiment of the present invention will be described referring to Fig. 3. This operation is basically an operation common to the embodiments described below.

In S101, via RRC signaling, the base station 10 transmits downlink SPS configuration information, PUCCH resource configuration information, slot format configuration information, and the like, to the terminal 20, and the terminal 20 receives these pieces of configuration information. Note that, in an embodiment of the present invention, the target is downlink SPS, and thus, hereinafter, "SPS" means downlink SPS.

The slot format configuration information is, for example, tdd-UL-DL-ConfigurationCommon or tdd-UL-DL-ConfigurationDedicated, and, according to these pieces of configuration information, the TDD configuration in each symbol of each slot in one or more slots is configured as DL, UL, or flexible. Hereinafter, the above configuration information is referred to as semi-static TDD configuration information. In addition, "flexible" may be described as "F". The terminal 20 basically determines DL/UL/F of each symbol in each slot, based on the semi-static TDD configuration information.

In addition, as the configuration information in S101, a plurality of slot format candidates may be indicated in order to enable the dynamic switching of the slot format. The configuration information is, for example, SlotFormatCombinationsPerCell. The information is information including slot format (SF) IDs, and thus, hereinafter, referred to as SFI configuration information.

In S102, the terminal 20 receives, from the base station 10, DCI that activates the SPS configuration, and, in S103, receives data via PDSCH resources according to the SPS configuration. In S104, the terminal 20 transmits, to the base station 10, SPS HARQ-ACK via the PUCCH resource of slots at the time position specified by the DCI (may also be the PUSCH resource in a case where there is UL scheduling). Hereinafter, the HARQ-ACK corresponding to the data reception via one or more PDSCH resources according to the SPS configuration will be described as "SPS HARQ-ACK". Note that, hereinafter, there may be a case in which SPS HARQ-ACK is referred to as HARQ-ACK. In addition, HARQ-ACK may be referred to as HARQ information, HARQ response, feedback information, or the like.

There may be a case in which the terminal 20 receives, from the base station 10, DCI that dynamically specifies the slot format in S102 or before or after S102. This DCI is control information that specifies an ID to be actually used from among a plurality of slot format IDs configured by the SFI configuration information. In a case where the slot format is specified by this DCI, the terminal 20 determines DL/UL/F of each symbol in each slot, based on this slot format, instead of based on the semi-static TDD configuration information. This DCI information is referred to as dynamic SFI specifying information (or, dynamic SFI, or SFI).

As described above, each time data is received according to SPS, a time position (slot), at which HARQ-ACK is transmitted via PUCCH resources, is specified to the terminal 20 via activation DCI.

However, in a case where a plurality of short-term SPSs are configured to the terminal 20, depending on the TDD DL/UL configuration (configuration by the semi-static TDD configuration information or by the dynamic SFI specifying information) in a slot of the specified time position, the symbol position, to which the PUCCH resource is configured, may collide with a DL symbol or an F symbol, and thus, the HARQ-ACK may be expected to be dropped.

In addition, as another case in which HARQ-ACK is dropped, there is a case in which priority order in the terminal 20 is related. For example, in a case where two UL transmissions, to which different priorities are configured, overlap with each other, a UL transmission with lower priority is to be dropped. In addition, there is a case in which priority order between terminals 20 is related. For example, when HARQ-ACKs are multiplexed in PUSCH, in a case where the PUSCH transmission is canceled due to the reception of DCI format 2_4 by the terminal 20, the HARQ-ACKs to be transmitted by the PUSCH are dropped.

There is a one-shot HARQ-ACK feedback as a method for retransmitting the above-described dropped HARQ-ACK. The payload size of the one-shot HARQ-ACK feedback becomes large because a codebook is used in which HARQ-ACKs corresponding to all HARQ processes in all serving cells in a PUCCH group are included.

Therefore, in an embodiment of the present invention, as a process related to a method of retransmitting HARQ-ACK, processes indicated by the following A) to D) will be clearly described.

A) DCI format triggering the HARQ-ACK retransmission is to be determined.
B) Which HARQ-ACK bit is to be retransmitted is to be determined.
C) A resource to be used for HARQ-ACK retransmission is to be determined.
D) A HARQ-ACK codebook to be used for the HARQ-ACK retransmission is to be determined.

A conventional DCI format may be used as the DCI format triggering the HARQ-ACK retransmission.

The conventional UE specific DCI with or without PUSCH or PDSCH scheduling may be used. For example, the conventional UE specific DCI may be DCI 0_0, DCI 0_1, DCI 1_0, DCI 1_1, or DCI 1_2. When triggering the HARQ-ACK retransmission by DCI 1_1, an upper layer parameter, pdsch-HARQ-ACK-OneShotFeedback-r16 may be indicated or need not be indicated. In a case where pdsch-HARQ-ACK-OneShotFeedback-r16 is indicated, 0 or 1 may be configured to the field of DCI for requesting the retransmission.

In addition, the conventional group-common DCI (GC (Group Common)-DCI) with or without a conventional function indication may be used. For example, the conventional group-common DCI format may be, DCI 2_0, DCI 2_1, DCI 2_2, DCI 2_3, DCI 2_4, or the like.

The DCI triggering HARQ-ACK retransmission and/or scheduling data, may be identified as 1) or 2) described below.

1) In a case where the DCI triggering the HARQ-ACK is not used at the same time with the conventional function (for example: data scheduling, SPS release, or the like, in the UE specific DCI; and SFI (Slot format indicator), TPC (Transmit power control), PI (Pre-emption indication), CI (Cancellation indication), or the like, in the GC-DCI), which of the HARQ-ACK retransmission or the conventional function is to be indicated by the DCI, may be identified by a new bit field or a conventional DCI field. For example, in a case where the FDRA (Frequency domain resource allocation) field is all zero or all one, the DCI may trigger the HARQ-ACK retransmission instead of data scheduling. In addition, in a case where it is necessary to indicate which HARQ-ACK is to be retransmitted, the conventional DCI field may be reinterpreted to indicate information related to the HARQ-ACK retransmission.
2) In a case where the DCI triggering the HARQ-ACK is used at the same time with the conventional function (for example: data scheduling, SPS release, or the like, in the UE specific DCI; and SFI, TPC, PI, CI, or the like, in the GC-DCI), whether the DCI triggers the HARQ-ACK, may be identified by a new bit field or a conventional DCI field. For example, in a case where the FDRA field is all zero or all one, the DCI may trigger the HARQ-ACK retransmission. In addition, in a case where it is necessary to indicate which HARQ-ACK is to be retransmitted, a newly added DCI field may be reinterpreted to indicate information related to the HARQ-ACK retransmission.

A new UE specific DCI format or GC-DCI format may be used as the DCI format triggering the HARQ-ACK retransmission described in A) above.

In a case where it is necessary to indicate which HARQ-ACK is to be retransmitted, a newly added DCI field may be defined to indicate information related to the HARQ-ACK retransmission.

Which priority is to be configured for transmitting HARQ-ACK may be determined as a method of determining which HARQ-ACK bit is to be retransmitted described in B) above.

Only the HARQ-ACK to which a priority is configured from among the priorities (for example, HP (High priority) and LP (Low priority)) configured to HARQ-ACK, may be retransmitted. The priority related to PUCCH carrying the HARQ-ACK to be retransmitted, may be the same priority as that of the HARQ-ACK transmission, in the prioritization in the terminal 20. For example, the priority of HARQ-ACK to be retransmitted, may be determined as described in the following 1) to 6).

1) The priority of HARQ-ACK to be retransmitted may be indicated by a priority indicator of the DCI field. For example, in a case where HARQ-ACK retransmission is triggered by the DCI that schedules PDSCH or PUSCH, the scheduled PDSCH or PUSCH and the HARQ-ACK to be retransmitted may have the same priority.
2) The priority of HARQ-ACK to be retransmitted may be indicated by a new DCI field.
3) The priority of HARQ-ACK to be retransmitted may be indicated by the DCI format. For example, DCI format 1_1 may indicate retransmission of LP HARQ-ACK, and DCI format 1_2 may indicate retransmission of HP HARQ-ACK.
4) LP HARQ-ACK may be always retransmitted.
5) HP HARQ-ACK may be always retransmitted.
6) With respect to the last dropped HARQ-ACK according to the rule described below, an implicit indication indicating that it is necessary to retransmit the dropped HARQ-ACK is to be retransmitted with the same priority may be indicated.

Priorities (for example, HP and LP) that are to both be configured for transmitting HARQ-ACK may be determined as a method of determining which HARQ-ACK bit is to be retransmitted described in B) above. For example, the priority of HARQ-ACK to be retransmitted, may be determined as described in the following 1) and 2).

1) LP HARQ-ACK and HP HARQ-ACK may be always retransmitted.
2) Whether HARQ-ACK for which both priorities are configured is to be retransmitted, or HARQ-ACK to which one of the priorities is configured is to be retransmitted may be indicated by a one-bit field of DCI. For example, in a case where the field is 1, HARQ-ACK to which priorities are both configured is to be retransmitted may be indicated. For example, in a case where the field is 0, HARQ-ACK to which one of the priorities is configured is to be retransmitted may be indicated, and which priority is to be configured to HARQ-ACK to be retransmitted may be indicated by a priority indicator of DCI. In addition, in a case where the field is 0, HARQ-ACK to which one of the priorities is configured is to be retransmitted may be indicated, and which priority is to be configured to HARQ-ACK to be retransmitted may be indicated by a new DCI field. In addition, in a case where the field is 0, HARQ-ACK to which one of the priorities is configured is to be retransmitted may be indicated, and which priority is to be configured to HARQ-ACK to be retransmitted may be indicated by the DCI format. For example, DCI format 1_1 may indicate retransmission of LP HARQ-ACK, and DCI format 1_2 may indicate retransmission of HP HARQ-ACK. In addition, in a case where the field is 0, HARQ-ACK to which one of the priorities is configured is to be retransmitted may be indicated, and LP HARQ-ACK may be always retransmitted. In addition, in a case where the field is 0, HARQ-ACK to which one of the priorities is configured is to be retransmitted may be indicated, and HP HARQ-ACK may be always retransmitted.

In a case where the priority indicator of DCI indicates which priority is to be configured to HARQ-ACK to be retransmitted, and in a case where a new DCI field indicates which priority is to be configured to HARQ-ACK to be retransmitted, the new DCI field may indicate whether HARQ-ACK to which priorities are both configured to be retransmitted or HARQ-ACK to which one of the priorities is configured is to be retransmitted.

In a case where the DCI format indicates which priority is configured to HARQ-ACK to be retransmitted, in a case where LP HARQ-ACK is always retransmitted, and in a case where HP HARQ-ACK is always retransmitted: the new DCI field may indicate whether HARQ-ACK to which priorities are both configured is to be retransmitted, or HARQ-ACK to which one of the priorities is configured is to be retransmitted; or the priority indicator may be reused to indicate whether HARQ-ACK to which priorities are both configured is to be retransmitted, or HARQ-ACK to which one of the priorities is configured is to be retransmitted

In a case where priorities (for example, HP and LP) are to be both configured for transmitting HARQ-ACK is determined as a method of determining which HARQ-ACK bit is to be retransmitted described above B), HARQ-ACKs may be separately retransmitted by using two HARQ-ACK codebooks. PUCCH resources described below may be determined for the two HARQ-ACK codebooks, and the priority configured to each PUCCH may be the same priority as that of the multiplexing process in the terminal 20.

In addition, in a case where priorities (for example, HP and LP) are to be both configured for transmitting HARQ-ACK is determined as a method of determining which HARQ-ACK bit is to be retransmitted described above B), HARQ-ACKs may be combined to be retransmitted by using one HARQ-ACK codebook. In a case where HARQ-ACKs are combined to be retransmitted, as illustrated in 1) to 4) below, the granularity of K1 (that is, slot or sub-slot), the PUCCH resource, and the priority related to the multiplexing process in the terminal 20 may be determined. Note that the K1 value indicates an offset from data to the corresponding HARQ-ACK.

1) The granularity of K1 may be based on the configuration of the HP HARQ-ACK codebook. The priority of the PUCCH resource for transmitting HP HARQ-ACK, related to the multiplexing process in the terminal 20, may be HP.
2) The granularity of K1 may be based on the configuration of the LP HARQ-ACK codebook. The priority of the PUCCH resource for transmitting LP HARQ-ACK, related to the multiplexing process in the terminal 20, may be HP.
3) The priority may be indicated by using a new DCI field, or may be indicated by reusing the priority indicator. The granularity of K1 may be based on the HARQ-ACK codebook configuration associated with the priority indicated by the new DCI field or the priority indicator. The priority configured to PUCCH for transmitting HARQ-ACK may be indicated by the new DCI field or the priority indicator. The priority of the PUCCH resource for transmitting HARQ-ACK, related to the multiplexing process in the terminal 20 may be indicated by the new DCI field or the priority indicator.
4) The priority may be indicated by the RRC configuration. The granularity of K1 may be based on the HARQ-ACK codebook configuration associated with the priority indicated by the RRC configuration. The priority configured to PUCCH for transmitting HARQ-ACK may be indicated by the RRC configuration. The priority of the PUCCH resource for transmitting HARQ-ACK, related to the multiplexing process in the terminal 20 may be indicated by the RRC configuration.

In addition, the following option 1) to option 7) may be determined as a method of determining which HARQ-ACK bit is to be retransmitted described above B).

Option 1) All of the dropped HARQ-ACK bits corresponding to all of the configured HARQ-ACK processes in all of the serving cells, may be retransmitted.
Option 2) HARQ-ACK bits of a part of or all of HARQ-ACKs in a window may be retransmitted. For example, the window size M may be defined by using the number of HARQ-ACKs as a unit. For example, the window size M may be a window size including as many as M number of the latest HARQ-ACKs (may be only the dropped HARQ-ACKs or may be all of HARQ-ACKs) located at or before an offset N before the retransmission-triggering DCI. In addition, with respect to the window size M, the window size M may be determined by the fact that the latest HARQ-ACKs located at or before an offset N from the retransmission triggering DCI are included in a window and the N number of HARQ-ACKs reported by the terminal 20 are located between the last dropped HARQ-ACK in the window and the DCI-reception starting slot, and the window size M may be determined by the fact that there are N slots or N sub-slots between the last dropped HARQ-ACK in the window and the DCI-reception starting slot.

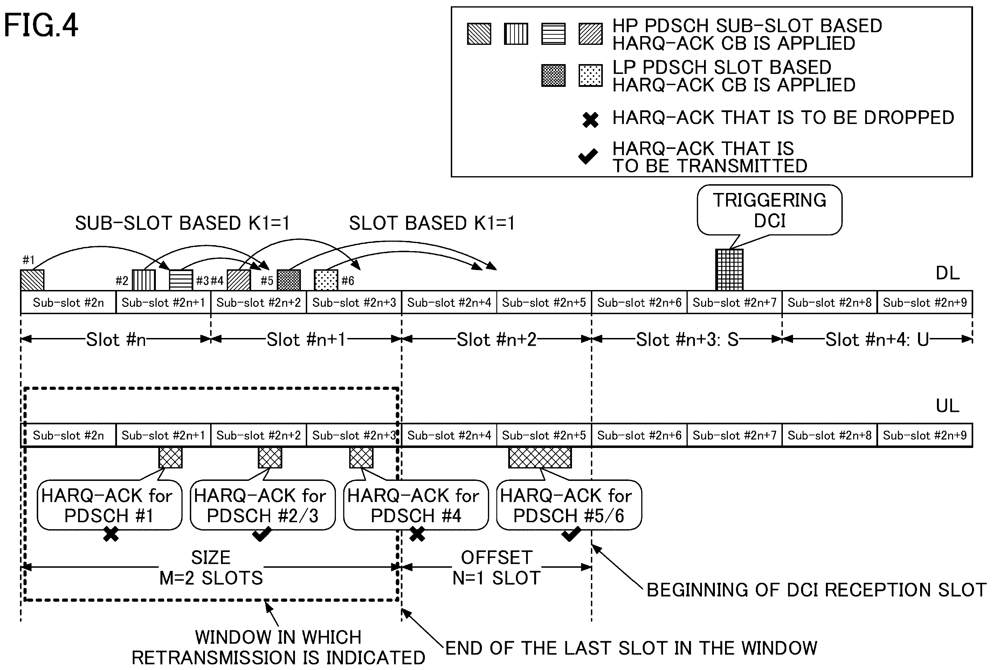

In addition, the window size M may be defined by using the slot or sub-slot as a unit. For example, the window may be defined as M slots or M sub-slots immediately before the triggering DCI. The beginning or ending slot or sub-slot of the window may be determined by applying an offset of N slots or N sub-slots prior to the start of the triggering DCI slot. Fig. 4 is a drawing illustrating an example of HARQ-ACK transmission in an embodiment of the present invention. Fig. 4 is an example of a window in which M=2 and N=1. In a case where retransmission is to be performed regardless of presence of dropped HARQ-ACK, HARQ-ACKs in sub-slots #2n+1, #2n+2, and #2n+3 are retransmitted. In a case where retransmission is to be performed only for the dropped HARQ-ACKs, HARQ-ACKs in sub-slots #2n+1 and #2n+3 are retransmitted.

The M slots or sub-slots and the N slots or sub-slots in the above option 2) may be defined according to the SCS of PUCCH configured to the serving cell, may be defined according to the SCS of PUCCH configured to the serving cell and the smallest SCS among the SCSs of the triggering DCIs, or may be defined according to the information element referenceSubcarrierSpacing indicated by the RRC configuration parameter tdd-UL-DL-ConfigurationCommon.

Option 3) The HARQ-ACK bits (dropped HARQ-ACKs or all HARQ-ACKs) corresponding to PDSCHs in a window configured for each serving cell may be retransmitted. For example, the window size M may be defined by using the number of PDSCHs as a unit. For example, the window size M may be a window size including as many as M number of the latest PDSCHs located at or before an offset N before the retransmission-triggering DCI. In addition, with respect to the window size M, the window size M may be determined by the fact that the latest PDSCHs located at or before an offset N from the retransmission-triggering DCI are included in a window of a current serving cell and the N number of PDSCHs are located between the last PDSCH in the window and the DCI-reception starting slot, and the window size M may be determined by the fact that there are N slots between the last PDSCH in the window and the DCI-reception starting slot.

In addition, the window size M may be defined by using the DL slot as a unit. For example, the window may be defined as M slots immediately before the triggering DCI. The beginning or ending slot of the window may be determined by applying an offset of N slots prior to the start of the triggering DCI slot.

The M slots and the N slots in the above-described option 3) may be defined according to the SCS of PUCCH configured to the serving cell, may be defined according to the smallest SCS among the SCS of the serving cell, the SCS of the retransmission-triggering DCI, and/or the SCS of PUCCH configured to the serving cell, or may be defined according to the information element referenceSubcarrierSpacing indicated by the RRC configuration parameter tdd-UL-DL-ConfigurationCommon.

Option 4) The HARQ-ACK (dropped HARQ-ACKs or all HARQ-ACKs) bits corresponding to PDSCHs in a window configured in common to all of the serving cells, may be retransmitted. For example, the window size M may be defined by using the number of PDSCHs as a unit. For example, the window size M may be a window size including as many as M number of the latest PDSCHs located at or before an offset N before the retransmission-triggering DCI. In addition, with respect to the window size M, the window size M may be determined by the fact that the latest PDSCHs located at or before an offset N from the retransmission-triggering DCI are included in a window of a current serving cell and the N number of PDSCHs are located between the last PDSCH in the window and the DCI-reception starting slot, and the window size M may be determined by the fact that there are N slots between the last PDSCH in the window and the DCI-reception starting slot.

In addition, the window size M may be defined by using the DL slot as a unit. For example, the window may be defined as M slots immediately before the triggering DCI. The beginning or ending slot of the window may be determined by applying an offset of N slots prior to the start of the triggering DCI slot.

The M slots and the N slots in the above-described option 4) may be defined according to the smallest SCS among the SCSs of configured PUCCH in all of the PDSCH serving cell, may be defined according to the smallest SCS among the SCS of triggering DCI and/or the SCS of PUCCH configured to the serving cell, and the SCS of the configured PDSCH in all of the PDSCH serving cells, or may be defined according to the information element referenceSubcarrierSpacing indicated by the RRC configuration parameter tdd-UL-DL-ConfigurationCommon.

The window size M and the offset N in the above-described option 2, option 3, and option 4 may be defined as described below.

The window size M and the offset N may be defined independently. The window size M and the offset N may be predefined by the specifications. In addition, the window size M and the offset N may be indicated by the RRC configuration. In addition, the window size M and the offset N may be indicated by a new DCI field, may be defined by reinterpreting the unused conventional DCI field, or a value set may be defined by specifications or may be configured by RRC and one value from among the set may be indicated by DCI.

The window size M and the offset N may be combined to be indicated by a new DCI field, or indicated by reusing the conventional DCI field such as the TDRA (Time domain resource allocation) field that is not used when accompanying no scheduling data. For example, a table of the window size M and the offset N may be configured by the RRC configuration or by the specifications, and M and N may be indicated by having a low index indicated by DCI. In the above-described table, M and N may be arranged in separated columns. In addition, in the above-described table, joint coding may be performed to M and N to be a single value (the same as S and L in SLIV).

In addition, in the above-described option 3, in a case where a serving-cell-specific window is required, an indication of M and N for each serving cell may be determined in common. For example, M and N may be applied to all of the serving cells by a single indication, or common M and N may be defined or indicated for each serving cell.

Option 5) The HARQ-ACK (dropped HARQ-ACKs or all HARQ-ACKs) bits corresponding to PDSCHs in a serving cell may be retransmitted. For example, the HARQ-ACK bits corresponding to PDSCHs in all of the serving cells may be retransmitted. In addition, for example, an index of the serving cell in which the HARQ-ACK bits corresponding to PDSCHs are transmitted, may be defined by the standards, or may be indicated by the RRC configuration.

In addition, for example, an index of the serving cell in which the HARQ-ACK bits corresponding to PDSCHs are transmitted may be indicated by a new DCI field, or may be indicated by reinterpreting the unused conventional DCI field. Each bit of the DCI field may correspond to a serving cell index, and the mapping between the bits and the cell indices may be defined by the specifications. That is, all of the serving cell indices may be mapped. Alternatively, the mapping between the bit and the cell index may be indicated by the RRC configuration. That is, RRC may configure a set of serving cell indices to be mapped. Alternatively, the mapping between the bit and the serving cell index may be indicated by DCI. For example, the mapping between a set of several serving cells and each bit sequence of the DCI field may be configured by the RRC configuration, and a set of serving cells, to which another DCI field is mapped may be indicated. In addition, for example, a set of several serving cells may be configured by the RRC configuration, and a set of a serving cell may be indicated by the DCI field. The serving cell index included in the set may be indicated for the HARQ-ACK retransmission.

Option 6) The HARQ-ACK bits of PDSCH corresponding to one HARQ process ID included in a HARQ process ID set, may be retransmitted.

For example, the HARQ-ACK bits corresponding to all of the configured HARQ process IDs in each serving cell may be retransmitted. In addition, for example, the HARQ-ACK bits determined in common to the HARQ process ID set in all of the serving cells, may be retransmitted. In addition, for example, the HARQ-ACK bits corresponding to the HARQ process ID set determined separately for each serving cell, may be retransmitted.

The above-described HARQ process ID set determined in common, or the above-described HARQ process ID set determined separately, may be determined as described in 1) to 3) below.

1) May be determined by the specifications.
2) May be indicated by the RRC configuration.
3) May be indicated by a new DCI field, or may be indicated by reinterpreting the unused conventional DCI field. For example, each bit included in the DCI field may correspond to one HARQ process ID, and the mapping between the bit and the HARQ process ID may be defined by the specifications. For example, all of the configured HARQ process IDs may be mapped. In addition, a set of HARQ process IDs to be mapped, may be configured by the RRC configuration. In addition, the mapping between the bit and the HARQ process ID may be indicated by DCI. For example, the mapping between a set of several HARQ process IDs and the bit sequence of the DCI field may be configured by the RRC configuration, and a set of HARQ process IDs, to which another DCI field is mapped may be indicated.

Option 7) HARQ-ACK bits to be transmitted may be determined by a combination of all of the above-described options 2 to 6.

For example, the HARQ-ACK bits corresponding to an indicated HARQ process ID of a serving cell, may be retransmitted according to the option 5 and the option 6. For example, the HARQ-ACK bits included in a window in a serving cell, may be retransmitted according to the option 2 and the option 5. For example, the HARQ-ACK bits corresponding to PDSCHs included in a window in a serving cell, may be retransmitted according to the option 3, the option 4 and the option 5. For example, the HARQ-ACK bits corresponding to PDSCHs corresponding to a HARQ process ID included in a window, may be retransmitted according to the option 2 and the option 6. For example, the HARQ-ACK bits corresponding to PDSCHs included in a window in a serving cell, may be retransmitted according to the option 3, the option 4 and the option 6.

Note that, in the above-described options 2 to 7, "dropped HARQ-ACK" may indicate only the dropped HARQ-ACK, or may indicate all of the HARQ-ACK bits. In the above-described options 1 to 7, the dropped HARQ-ACK may be dropped based on at least one of the reasons indicated by 1) to 3) below.

1) The drop according to the UL cancel indicator (CI).
2) The drop according to the multiplexing in the terminal 20.
3) The drop according to the TDD collision with an invalid symbol. The invalid symbol may be, for example, a semi-static DL symbol or a semi-static flexible symbol according to the SFI indicator and/or the SSB/CORESET#0.

Note that, in a case where HARQ-ACKs, to which two types of priorities are configured, are retransmitted, each priority of the HARQ-ACK bits to be retransmitted, may be determined separately, or may be combined to be determined.

For example, each priority of the HARQ-ACK bits to be retransmitted may be determined separately, or which of the above-described options is to be applied to which priority may be determined independently. Even in a case where the above-described same option is used, separated configuration or indication may be used. In a case where an indication by the DCI field or the RRC configuration is selected, the DCI field separated to each priority or the RRC configuration separated to each priority may be used.

For example, each priority of the HARQ-ACK bits to be retransmitted may be combined to be determined, or the same option above-described may be used. In a case where an indication by the DCI field or the RRC configuration is selected, the indication by the DCI field or the RRC configuration may be applied to both priorities.

The following method may be applied as a method of determining a resource to be used or the HARQ-ACK retransmission described in the above C).

In PUCCH, in a case where HARQ-ACK is to be retransmitted, for example, in a case of: DCI format 1_0, DCI format 1_1, and DCI format 1_2 with or without PDSCH scheduling; and DCI format 0_0, DCI format 0_1, and DCI format 0_2 with or without PUSCH scheduling, the resource for retransmitting HARQ-ACK may be determined as shown by the following 1) to 3). That is, the timing of HARQ-ACK and the PUCCH resource ID may be determined.

1) The timing of HARQ-ACK and the PUCCH resource ID may be defined by the specifications. For example, HARQ-ACK may be transmitted in a slot one slot after the slot in which DCI is received.
2) The timing of HARQ-ACK and the PUCCH resource ID may be configured by the RRC configuration.
3) The timing of HARQ-ACK and the PUCCH resource ID may be indicated by a new DCI field or the conventional DCI field (for example, the HARQ-ACK timing may be determined by the PDSCH-to-HARQ_feedback timing indicator field of DCI format 1_0, DCI format 1_1, and DCI format 1_2, and the PUCCH resource ID may be determined by the PRI (PUCCH resource indicator) field). Note that, in a case where: the retransmission-triggering DCI schedules PDSCH; the conventional PDSCH-to-HARQ_feedback timing indicator field is used for an indication of the timing of HARQ-ACK to be retransmitted; and the priority of HARQ-ACK corresponding to the scheduled PDSCH is the same as the priority of the HARQ-ACK to be retransmitted, with respect to the HARQ-ACK corresponding to the scheduled PDSCH, there is a possibility that the same codebook as that of the HARQ-ACK bits to be retransmitted is to be used.

Which of the above-described 1) to 3) is to be used for the HARQ-ACK timing and the PUCCH resource ID may be independently determined.

In the above-described 1) to 3), in a case where HARQ-ACKs, to which priorities are both configured, are separated for each priority to be transmitted, the HARQ-ACK timing and/or the PUCCH resource ID, and the HARQ-ACK codebook may be separated for each priority to be determined, or may be combined to be determined.

In a case where the above-described separation is performed for each priority, which of the above-described options is to be applied to each priority may be determined independently. In a case where the RRC configuration is performed for both priorities, the separation may be performed for each priority and the RRC configuration may be performed. In a case where the DCI indication is performed for both priorities, the separated DCI field for each priority may be used. In a case where the conventional PDSCH-to-HARQ_feedback timing indicator field or PRI field is used for HARQ-ACK retransmission, which of LP or HP is to be used for applying the field may be defined by the specifications, may be configured by RRC, or may be indicated by the priority field of DCI. The HARQ-ACK timing in another priority may be indicated by a new DCI field, or the HARQ-ACK timing in another priority may be indicated by reinterpreting the conventional unused DCI field.

In a case where the above-described combining is performed, the definition may be performed by the specifications, the configuration may be performed by RRC, or one value indicated by the DCI field may be applied to both priorities.

Note that, with respect to the HARQ-ACK timing indication, the reference point of the K1 value may be a slot in which DCI is received, or may be a slot indicated by the TDRA field.

On the other hand, in a case where HARQ-ACK is retransmitted in PUSCH, for example, in a case of DCI format 0_0, DCI format 0_1, or DCI format 0_2 with or without UL-SCH scheduling, the resource for retransmitting HARQ-ACK may be determined as described below.

The HARQ-ACK bit to be retransmitted may be multiplexed into PUSCH with or without UL-SCH. The multiplexing parameters, such as a β offset and a scheduling factor α, may be determined as shown in 1) to 3) below.

1) The multiplexing parameters may be defined by the specifications. For example, with respect to PUSCH for retransmitting HARQ-ACK, β offset=1 and α=1 may be fixedly configured.
2) The multiplexing parameters may be configured by RRC. The conventional configuration for multiplexing UCI in PUSCH may be reused, or a new configuration to be applied only at the time of HARQ-ACK retransmission may be added.
3) The multiplexing parameters may be indicated by a new DCI field, or may be indicated by a conventional DCI field (for example, the β offset field).

In a case where the priorities are both configured to the HARQ-ACK bits to be retransmitted, the separation may be performed to be retransmitted for each priority, LP HARQ-ACK and HP HARQ-ACK may be separately coded or may be jointly coded.

When multiplexing PUSCH, which of the separate coding or the joint coding is to be used, may be defined by the specifications, may be determined by the RRC configuration, may be determined by a new DCI field included in the retransmission triggering DCI, or may be determined by reusing the conventional unused DCI field.

In a case where the separate coding is used, the β offset and the α value may be independently determined for respective priorities, or may be combined to be determined.

In a case where the separation is performed for each priority, which of the options is to be applied to each priority may be determined independently. In a case where the RRC configuration is performed for both priorities, the separation may be performed for each priority and the RRC configuration may be performed. In a case where the DCI indication is performed for both priorities, the separated DCI field for each priority may be used. In a case where the conventional β offset field is used, which of LP or HP is to be used for applying the field may be defined by the specifications, may be configured by RRC, or may be indicated by the priority field of DCI. The β offset/α value may be indicated by a new DCI field, or the β offset/α value in another priority may be indicated by reinterpreting the conventional unused DCI field.

In a case where the joint coding is used, one defined value, one RRC configuration, or one DCI field, may be applied to both priorities. In a case where the joint coding is applied, the β offset and/or the α value may be indicated by a new DCI field for two priorities, or may be indicated by a conventional DCI field (for example, the β offset field).

Here, in order to configure the HARQ-ACK codebook, an indication of UL-DAI included in the retransmission triggering DCI may be performed as described below.

In a case where an indication of UL-DAI is performed for one priority, for example, the UL-DAI may be indicated by a new DCI field, or may be indicated by a conventional field (for example, 1st DAI index field or 2nd DAI index field).

In a case where an indication of UL-DAI is performed for both priorities (in a case where the HARQ-ACK retransmission is triggered for both priorities), the indication may be performed as described in 1) to 3) below.

1) Two DAI values may be indicated by two DCI fields by separating into the LP codebook and the HP codebook. The two DCI fields may be two new DCI fields, or may be two conventional fields (for example, 1st DAI index field and 2nd DAI index field).
2) Two DAI values may be indicated by one DCI field (for example, may be separated into the LSB side bits and the MSB side bits) by separating into the LP codebook and the HP codebook. The one DCI field may be one new DCI field, or may be one conventional DCI field (for example, 1st DAI index field or 2nd DAI index field).
3) One DAI value may be indicated by one DCI field with respect to the entirety of the LP codebook and the HP codebook. The one DCI field may be one new DCI field, or may be one conventional DCI field (for example, 1st DAI index field or 2nd DAI index field).

The following methods 1) to 4) may be applied as a method of determining a HARQ-ACK codebook to be used for HARQ-ACK retransmission described in the above D).

1) Determination may be performed in the same way as the type 1 HARQ-ACK codebook. That is, the codebook may be configured based on the determination of candidates of the HARQ-ACK window and the PDSCH occasion for each serving cell.

As a first step, HARQ-ACK bits to be retransmitted are determined, and the HARQ-ACK window including the slots of corresponding PDSCH reception or the SPS released slots is determined. As a subsequent second step, candidates of the PDSCH occasion included in the determined HARQ-ACK window are determined. As a subsequent third step, HARQ-ACK bits are generated with respect to the candidates of the PDSCH occasion in each slot.

2) Determination may be performed in the same way as the type 2 HARQ-ACK codebook. That is, the codebook may be configured based on the PDCCH monitoring occasion and the DAI field included in DCI.

As a first step, HARQ-ACK bits to be retransmitted, and the corresponding PDSCH reception or the SPS release, are determined. As a subsequent second step, with respect to the dynamic PDSCH reception or the SPS release, the HARQ-ACK bits are sorted in the same way as Release 16. That is, in a case where the terminal 20 has indicated to support PDSCH-Number-perMOperCell, the sorting is performed: in the ascending order of the start time of PDSCHs that have the same combination of the serving cell and the PDCCH monitoring occasion; and then, in the ascending order of the serving cell indices, and then, in the ascending order of the PDCCH monitoring occasion indices. As a subsequent third step, the HARQ-ACK bits corresponding to the SPS-PDSCH reception are added to the end of the HARQ-ACK bits corresponding to the dynamic PDSCH reception or the SPS release.

In the above-described 2), in a case where the HARQ-ACK codebook includes HARQ-ACK bits to which two priorities are configured, with respect to the determination of the order of HARQ-ACK bits, the second step and the third step may be applied to the HARQ-ACK bits corresponding to the HP sub-codebook, and then, the second step and the third step may be applied to the HARQ-ACK bits corresponding to the LP sub-codebook.

Alternatively, with respect to the determination of the order of HARQ-ACK bits, the second step may be applied to the HP-HARQ-ACK bits and the LP-HARQ-ACK bits, and then, the third step may be applied to the HP-HARQ-ACK bits and the LP-HARQ-ACK bits. In the second step and the third step, the LP-HARQ-ACK bits and the HP-HARQ-ACK bits may be separated to be sorted. In addition, in the second step and the third step, the LP-HARQ-ACK bits and the HP-HARQ-ACK bits may be combined to be sorted. In addition, in the second step, the LP-HARQ-ACK bits and the HP-HARQ-ACK bits may be separated to be sorted, and in the third step, the LP-HARQ-ACK bits and the HP-HARQ-ACK bits may be combined to be sorted. In addition, in the second step, the LP-HARQ-ACK bits and the HP-HARQ-ACK bits may be combined to be sorted, and in the third step, the LP-HARQ-ACK bits and the HP-HARQ-ACK bits may be separated to be sorted.

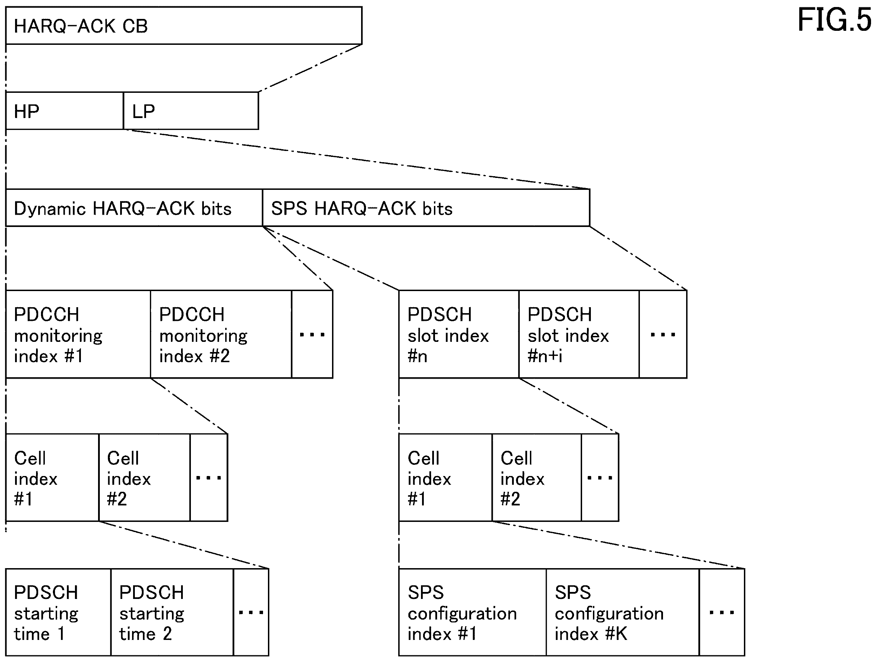

Fig. 5 is a drawing illustrating an example (1) of a HARQ-ACK codebook in an embodiment of the present invention. Fig. 5 is an example in which, with respect to the determination of the order of HARQ-ACK bits, the second step and the third step are applied to the HARQ-ACK bits corresponding to the HP sub-codebook, and then, the second step and the third step are applied to the HARQ-ACK bits corresponding to the LP sub-codebook.

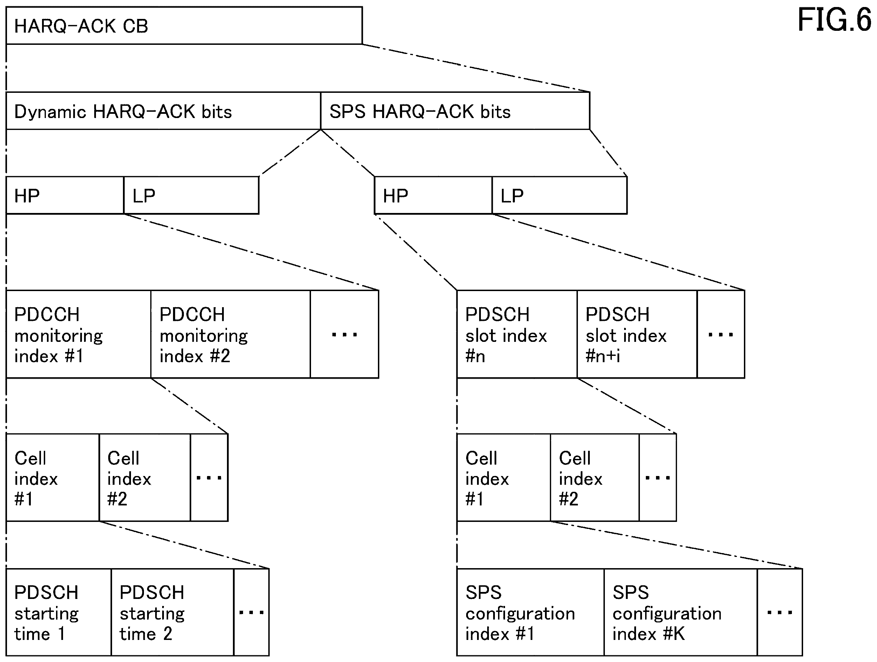

Fig. 6 is a drawing illustrating an example (2) of a HARQ-ACK codebook in an embodiment of the present invention. Fig. 6 is an example in which, in the second step and the third step, the LP-HARQ-ACK bits and the HP-HARQ-ACK bits are separated to be sorted.

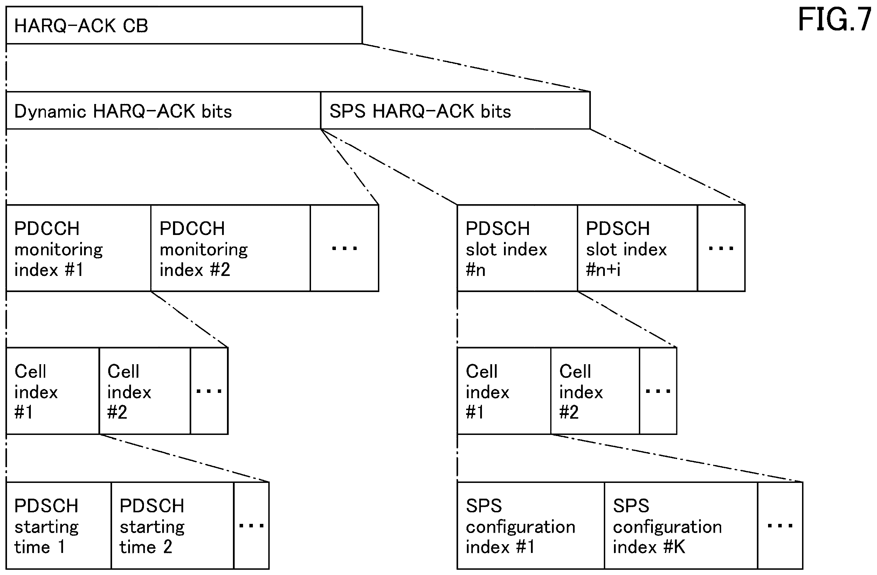

Fig. 7 is a drawing illustrating an example (3) of a HARQ-ACK codebook in an embodiment of the present invention. Fig. 7 is an example in which, in the second step and the third step, the LP-HARQ-ACK bits and the HP-HARQ-ACK bits are combined to be sorted.

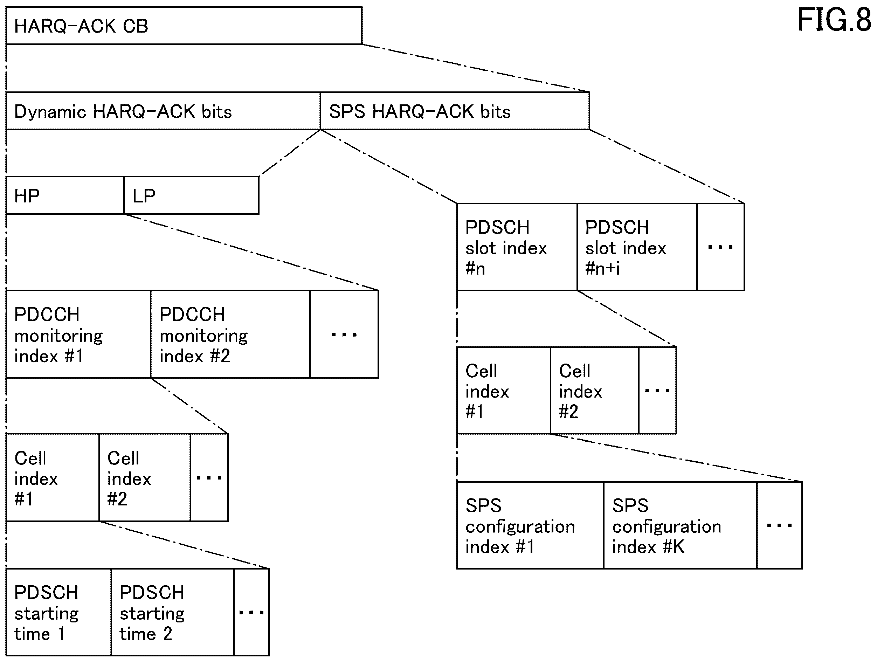

Fig. 8 is a drawing illustrating an example (4) of a HARQ-ACK codebook in an embodiment of the present invention. Fig. 8 is an example in which, in the second step, the LP-HARQ-ACK bits and the HP-HARQ-ACK bits are separated to be sorted, and in the third step, the LP-HARQ-ACK bits and the HP-HARQ-ACK bits are combined to be sorted.

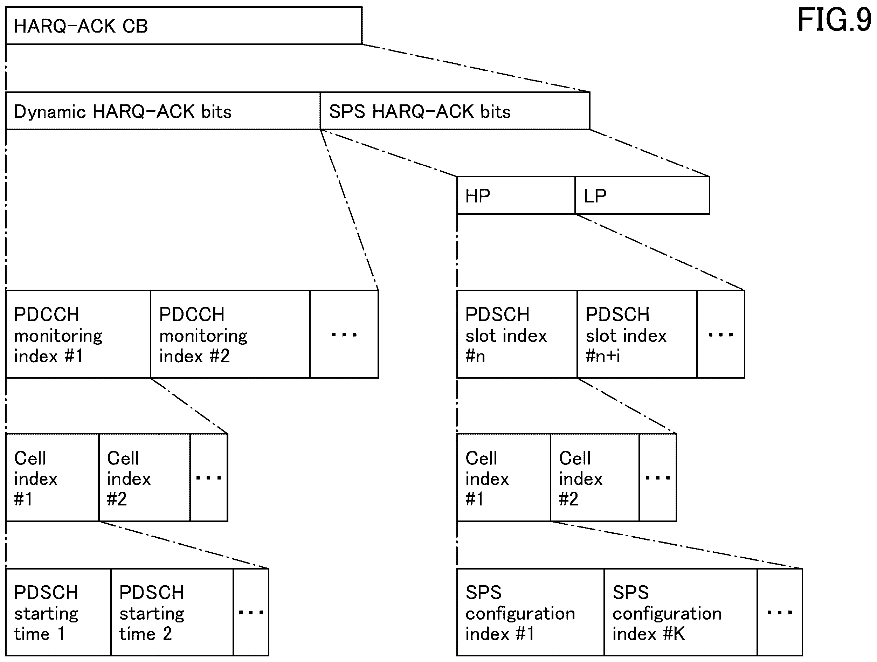

Fig. 9 is a drawing illustrating an example (5) of a HARQ-ACK codebook in an embodiment of the present invention. Fig. 9 is an example in which, in the second step, the LP-HARQ-ACK bits and the HP-HARQ-ACK bits are combined to be sorted, and in the third step, the LP-HARQ-ACK bits and the HP-HARQ-ACK bits are separated to be sorted.

3) Determination may be performed in the same way as the type 3 HARQ-ACK codebook. That is, the codebook may be configured based on the HARQ process AIDs in each serving cell.

As a first step, HARQ-ACK bits to be retransmitted, and the corresponding PDSCH reception or the SPS release, are determined. As a subsequent second step, the HARQ-ACK bits are sorted in the ascending order of the HARQ process IDs for each serving cell, and then, the HARQ-ACK bits are sorted in the ascending order of the serving cell indices.

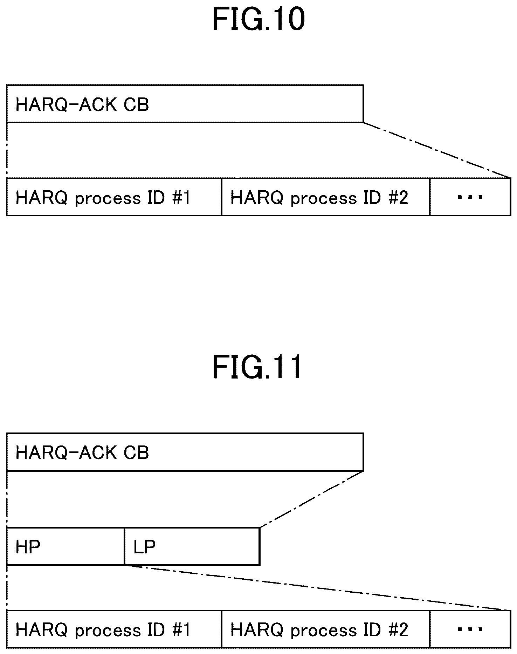

Fig. 10 is a drawing illustrating an example (6) of a HARQ-ACK codebook in an embodiment of the present invention. Fig. 10 is an example in which the LP-HARQ-ACK bits and the HP-HARQ-ACK bits are combined to be applied to the second step.

Fig. 11 is a drawing illustrating an example (7) of a HARQ-ACK codebook in an embodiment of the present invention. Fig. 10 is an example in which the second step is applied to the HP-HARQ-ACK bits, and then, the second step is applied to the LP-HARQ-ACK bits.

4) The HARQ-ACK codebook may be configured based on one or more of the elements a) to e) described below.

a) PDSCH slot index
b) Slot index or sub-slot index of the HARQ-ACK codebook
c) Start symbol or ending symbol of PDSCH or SPS release
d) Priority (in a case where the HARQ-ACK bits have two priorities)
e) Serving cell index

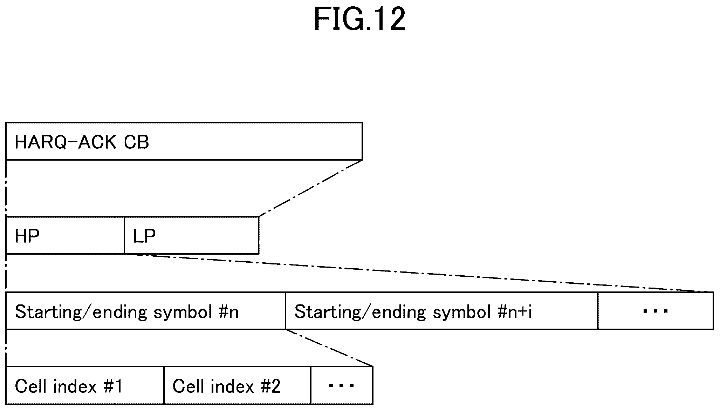

Fig. 12 is a drawing illustrating an example (8) of a HARQ-ACK codebook in an embodiment of the present invention. Fig. 12 is an example of the order of the HARQ-ACK bits sorted based on the above-described d), and then, above-described c), and then, above-described e).

Which of the HARQ-ACK codebook configuration methods described in the above-described 1) to 4) is to be used may be determined depending on the RRC parameter pdsch-HARQ-ACK-Coodbook, or may be determined independently. For example, in a case where pdsch-HARQ-ACK-Coodbook is semi-static, 1) may be used. For example, in a case where pdsch-HARQ-ACK-Coodbook is dynamic, 2) may be used.

In addition, which of the HARQ-ACK codebook configuration methods described in the above-described 1) to 4) is to be used may be defined by the specifications, may be configured by RRC, or may be indicated by the reinterpretation of a new DCI field or a conventional DCI field included in the retransmission triggering DCI.

In an embodiment of the present invention, which operation or method is to be used may be configured by an upper layer parameter, may be determined based on the UE capability reported by the terminal 20, may be defined in advance by the specifications, or may be determined by the upper layer parameter and the UE capability.

Note that, in a case where the same configuration method as that of the type 3 HARQ-ACK codebook is used, for example: the HARQ-ACK retransmission may be triggered by DCI format 1_1 and the HARQ-ACK bits corresponding to all of the configured HARQ-ACK process Ids for each serving cell may be retransmitted; and the resource for retransmitting the HARQ-ACK bits may be determined by the specifications to be fixedly located, for example, in one slot after the DCI reception slot.

Hereinafter, the UE capabilities described in 1) to 2) may be defined.

1) UE capability indicating whether an enhanced function related to the HARQ-ACK retransmission triggered by DCI is to be supported.
2) UE capability indicating whether a single DCI triggering a plurality of HARQ-ACK retransmissions is to be supported.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only one of the functions in an embodiment of the present invention.

### <Base station 10>

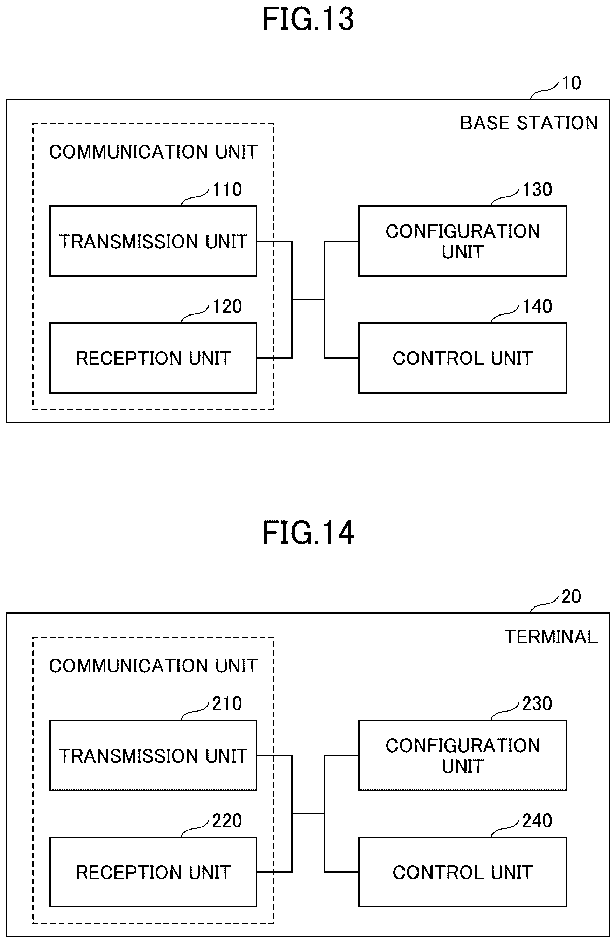

Fig. 13 is a diagram illustrating an example of a functional configuration of the base station 10. As shown in Fig. 13, the base station 10 includes a transmission unit 110, a reception unit 120, a configuration unit 130, and a control unit 140. The functional structure illustrated in Fig. 13 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus if necessary. The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

### <Terminal 20>

Fig. 14 is a diagram illustrating an example of a functional configuration of the terminal 20. As shown in FIG. 14, the terminal 20 includes a transmission unit 210, a reception unit 220, a configuration unit 230, and a control unit 240. The functional structure illustrated in Fig. 14 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device if necessary. In addition, the configuration unit 230 also stores pre-configured configuration information. The control unit 240 controls the entire terminal 20. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

### (Embodiment summary)

As described above, according to an embodiment of the present invention, a terminal is provided. The terminal includes: a control unit configured to receive data and control information triggering retransmission of a HARQ (Hybrid automatic repeat request) response corresponding to the data; a control unit configured to determine a HARQ response to be retransmitted in a case where the control information is received by the reception unit; and a transmission unit configured to transmit the HARQ response to be retransmitted, wherein the control unit determines the response to be retransmitted at least based on a priority configured to the HARQ response.

According to the above configuration, when DCI triggering retransmission of the dropped HARQ-ACK is received, the terminal 20 can determine which HARQ-ACK bit is to be retransmitted by considering a condition including a priority, determine which resource is to be used for retransmitting the HARQ-ACK bit, and determine the HARQ-ACK codebook to be applied to the retransmission. That is, the terminal is enabled to retransmit, to a base station, the dropped feedback information corresponding to the reception of data.

The control unit may determine a granularity of a value of an offset from the data to the corresponding HARQ response, based on a HARQ response to which a high priority is configured. According to the above configuration, the terminal 20 can configure the timing for retransmitting the HARQ-ACK depending on the priority.

The control unit may include, in the HARQ response to be retransmitted, a HARQ response whose transmission has been dropped from among HARQ responses that have occurred in a specific period before reception of the control information. According to the above configuration, when DCI triggering retransmission of the dropped HARQ-ACK is received, the terminal 20 can determine which HARQ-ACK bit is to be retransmitted by considering a condition including a priority.

In a case where a plurality of priorities are configured to the HARQ response, the control unit may determine a resource for transmitting the HARQ response to be retransmitted, the resource being separately determined for each priority. According to the above configuration, when DCI triggering retransmission of the dropped HARQ-ACK is received, the terminal 20 can determine which HARQ-ACK bit is to be used for retransmitting the HARQ-ACK bit by considering a condition including a priority.

In a case where a plurality of priorities are configured to the HARQ response, the control unit may determine a codebook to be applied to the HARQ response to be retransmitted, the codebook being separately determined for each priority. When DCI triggering retransmission of the dropped HARQ-ACK is received, the terminal 20 can determine the HARQ-ACK codebook by considering a condition including a priority.

In addition, according to an embodiment of the present invention, a communication method performed by a terminal is provided. The communication method includes: receiving data and control information triggering retransmission of a HARQ (Hybrid automatic repeat request) response corresponding to the data; determining a HARQ response to be retransmitted, in a case where the control information is received; transmitting the HARQ response to be retransmitted; and determining the response to be retransmitted, at least based on a priority configured to the HARQ response.

According to the above configuration, when DCI triggering retransmission of the dropped HARQ-ACK is received, the terminal 20 can determine which HARQ-ACK bit is to be retransmitted by considering a condition including a priority, determine which resource is to be used for retransmitting the HARQ-ACK bit, and determine the HARQ-ACK codebook to be applied to the retransmission. That is, the terminal is enabled to retransmit, to a base station, the dropped feedback information corresponding to the reception of data.

### (Hardware structure)

In the above functional structure diagrams used for describing an embodiment of the present invention (Fig. 13 and Fig. 14), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

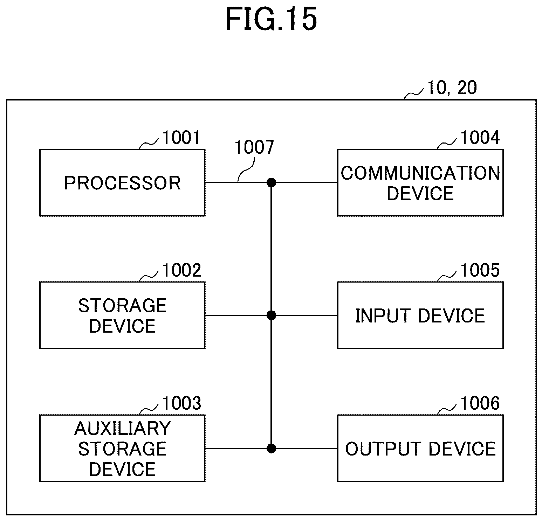

For example, the base station 10, terminal 20, etc., according to an embodiment of the present disclosure may function as a computer for processing the radio communication method of the present disclosure. Fig. 15 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 13 may be realized by control programs that are stored in the storage device 1002 and are executed by the processor 1001. Further, for example, the control unit 240 of the terminal 20 illustrated in Fig. 14 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may include a high frequency switch. duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch. button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of a RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Note that, in this disclosure, HARQ-ACK is an example of a HARQ response. The DCI triggering retransmission is an example of control information requesting retransmission of a response corresponding to data.

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the claims. Therefore, the descriptions of the present specification are for illustrative purposes only, and are not intended to be limitations to the present invention.

### [DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

## Claims

1. A terminal comprising:
a receiving unit configured to receive, from a base station:
data; and
downlink control information, DCI, that includes: a field indicating retransmission of a dropped Hybrid Automatic Repeat reQuest, HARQ, response corresponding to the data; and a field indicating priority of the dropped HARQ response, wherein the DCI does not schedule the data;
a control unit configured to determine, when the receiving unit receives the DCI, a dropped HARQ response to be retransmitted, based on: the priority; a predefined window size, wherein the window comprises one or more HARQ responses; and an offset obtained by reinterpreting an existing field included in the DCI wherein the offset indicates a number of time units from the beginning or ending time unit of the window to the start of the time unit of the DCI; and
a transmitting unit configured to transmit, to the base station, the dropped HARQ response to be retransmitted.

2. A communication method performed by a terminal, the communication method comprising:
receiving, from a base station:
data; and
downlink control information, DCI, that includes: a field indicating retransmission of a dropped Hybrid Automatic Repeat reQuest, HARQ, response corresponding to the data; and a field indicating priority of the dropped HARQ response, wherein the DCI does not schedule the data;
determining, when the receiving receives the DCI, a dropped HARQ response to be retransmitted, based on: the priority; a predefined window size, wherein the window comprises one or more HARQ responses; and an offset obtained by reinterpreting an existing field included in the DCI wherein the offset indicates a number of time units from the beginning or ending time unit of the window to the start of the time unit of the DCI; and
transmitting, to the base station, the dropped HARQ response to be retransmitted.

## Patentansprüche

1. Endgerät, umfassend:
eine Empfangseinheit, die so konfiguriert ist, dass sie von einer Basisstation Folgendes empfängt:
Daten; und
Downlink-Steuerinformationen, DCI, die Folgendes einschließen: ein Feld, das eine erneute Übertragung einer fallengelassenen Antwort auf eine hybride automatische Wiederholungsanforderung, HARQ, gemäß den Daten angibt; und ein Feld, das eine Priorität der fallengelassenen HARQ-Antwort angibt, wobei die DCI die Daten nicht planen;
eine Steuereinheit, die so konfiguriert ist, dass sie, wenn die Empfangseinheit die DCI empfängt, eine erneut zu übertragende fallengelassene HARQ-Antwort basierend auf Folgendem bestimmt: der Priorität; einer vordefinierten Fenstergröße, wobei das Fenster eine oder mehrere HARQ-Antworten umfasst; und einem Versatz, der erhalten wird, indem ein bestehendes Feld, das in den DCI enthalten ist, neu interpretiert wird, wobei der Versatz eine Anzahl von Zeiteinheiten von der Anfangs- oder Endzeiteinheit des Fensters bis zum Start der Zeiteinheit der DCI angibt; und
eine Übertragungseinheit, die so konfiguriert ist, dass sie die erneut zu übertragende fallengelassene HARQ-Antwort an die Basisstation überträgt.

2. Kommunikationsverfahren, das von einem Endgerät durchgeführt wird, wobei das Kommunikationsverfahren Folgendes umfasst:
Empfangen, von einer Basisstation, von:
Daten; und
Downlink-Steuerinformationen, DCI, die Folgendes einschließen: ein Feld, das eine erneute Übertragung einer fallengelassenen Antwort auf eine hybride automatische Wiederholungsanforderung, HARQ, gemäß den Daten angibt; und ein Feld, das eine Priorität der fallengelassenen HARQ-Antwort angibt, wobei die DCI die Daten nicht planen;
Bestimmen, wenn die Empfangseinheit die DCI empfängt, einer erneut zu übertragenden fallengelassenen HARQ-Antwort basierend auf Folgendem: der Priorität; einer vordefinierten Fenstergröße, wobei das Fenster eine oder mehrere HARQ-Antworten umfasst; und einem Versatz, der erhalten wird, indem ein bestehendes Feld, das in den DCI enthalten ist, neu interpretiert wird, wobei der Versatz eine Anzahl von Zeiteinheiten von der Anfangs- oder Endzeiteinheit des Fensters bis zum Start der Zeiteinheit der DCI angibt; und
Übertragen der erneut zu übertragenden fallengelassenen HARQ-Antwort an die Basisstation.

## Revendications

1. Terminal comprenant :
une unité de réception configurée pour recevoir, en provenance d'une station de base :
des données ; et
des informations de commande de liaison descendante, DCI, qui incluent : un champ indiquant la retransmission d'une réponse de demande de répétition automatique hybride, HARQ, abandonnée correspondant aux données ; et un champ indiquant la priorité de la réponse HARQ abandonnée, dans lequel les DCI ne planifient pas les données ;
une unité de commande configurée pour déterminer, lorsque l'unité de réception reçoit les DCI, une réponse HARQ abandonnée à retransmettre, sur la base : de la priorité ; d'une taille de fenêtre prédéfinie, dans lequel la fenêtre comprend une ou plusieurs réponses HARQ ; et d'un décalage obtenu par la réinterprétation d'un champ existant inclus dans les DCI, dans lequel le décalage indique un nombre d'unités de temps depuis l'unité de temps de début ou de fin de la fenêtre jusqu'au début de l'unité de temps des DCI ; et
une unité de transmission configurée pour transmettre, à la station de base, la réponse HARQ abandonnée à retransmettre.

2. Procédé de communication mis en œuvre par un terminal, le procédé de communication comprenant :
la réception, en provenance d'une station de base :
des données ; et
des informations de commande de liaison descendante, DCI, qui incluent : un champ indiquant la retransmission d'une réponse de demande de répétition automatique hybride, HARQ, abandonnée correspondant aux données ; et un champ indiquant la priorité de la réponse HARQ abandonnée, dans lequel les DCI ne planifient pas les données ;
la détermination, lorsque la réception reçoit les DCI, d'une réponse HARQ abandonnée à retransmettre, sur la base : de la priorité ; d'une taille de fenêtre prédéfinie, dans lequel la fenêtre comprend une ou plusieurs réponses HARQ ; et d'un décalage obtenu par la réinterprétation d'un champ existant inclus dans les DCI, dans lequel le décalage indique un nombre d'unités de temps depuis l'unité de temps de début ou de fin de la fenêtre jusqu'au début de l'unité de temps des DCI ; et
la transmission, à la station de base, de la réponse HARQ abandonnée à retransmettre.
